# FASCICULE DE BREVET EUROPEEN

(11) **EP 0 740 268 B1**
(45) Date de publication et mention de la délivrance du brevet: **10.10.2001**
(21) Numéro de dépôt: 96400867.6
(22) Date de dépôt: 24.04.1996
(51) Int. Cl.: G06K 19/073, G07F 7/10

(54) **Carte à mémoire et procédé de mise en oeuvre d'une telle carte**
Speicherkarte und Vorrichtung zum Betrieb einer solchen Karte
Memory card and method for using such a card

(30) Priorité: 26.04.1995 FR 9504992
(43) Date de publication de la demande: 30.10.1996
(73) Titulaire: FRANCE TELECOM, 75015 Paris (FR)
(72) Inventeur: Menconi, Martial, 75013 Paris (FR)
(74) Mandataire: Dubois-Chabert, Guy

(56) Documents cités:
- FR-A- 2 689 662
- FR-A- 2 698 468
- FR-A- 2 701 578

## Description

### Domaine technique

La présente invention concerne une carte mémoire et un procédé de mise en oeuvre d'une telle carte.

### Etat de la technique antérieure

Depuis 1983, France Télécom n'a cessé d'accroître son parc de publiphones à cartes sur le territoire national. Le nombre des publiphones à cartes installés est actuellement de plus de 120 000 et de plus de 4 000 téléphones d'intérieur à cartes. Dès 1993, les ventes de télécartes ont atteint les 100 000 000 par an. Par ailleurs, France Télécom poursuit ses développements en vue de proposer de nouveaux terminaux, tels le Publifax et le publiphone d'intérieur.

France Télécom était de plus confrontée à un besoin à l'export d'une plus grande capacité de comptage, notamment en direction des opérateurs qui pratiquent des tarifs de communication locale très bas et de communication internationale très élevés. Pour répondre à ces besoins, le SEPT a proposé la mise au point de nouvelles cartes comportant non seulement une capacité accrue, mais aussi une personnalisation plus flexible, ainsi qu'une sécurité active.

Une nouvelle télécarte, dite de deuxième génération ou "T2G", autorise une capacité de comptage beaucoup plus élevée par un mécanisme de boulier, et sa consommation en courant électrique est bien inférieure. En matière de sécurité, elle fonctionne selon un mécanisme appelé "challenge/réponse" : lors de l'envoi d'un aléa, la carte sait calculer une signature grâce à un secret unique qu'elle contient et est la seule à contenir. Avec la nouvelle technologie CMOS ("Complementary Metal Oxyde Semiconductor") une tension de programmation externe n'est plus nécessaire. Cette tension est générée en interne par une "pompe de charge" qui, à partir de 5 volts, produit la tension nécessaire pour faire basculer les bits de la mémoire lors de la consommation des unités.

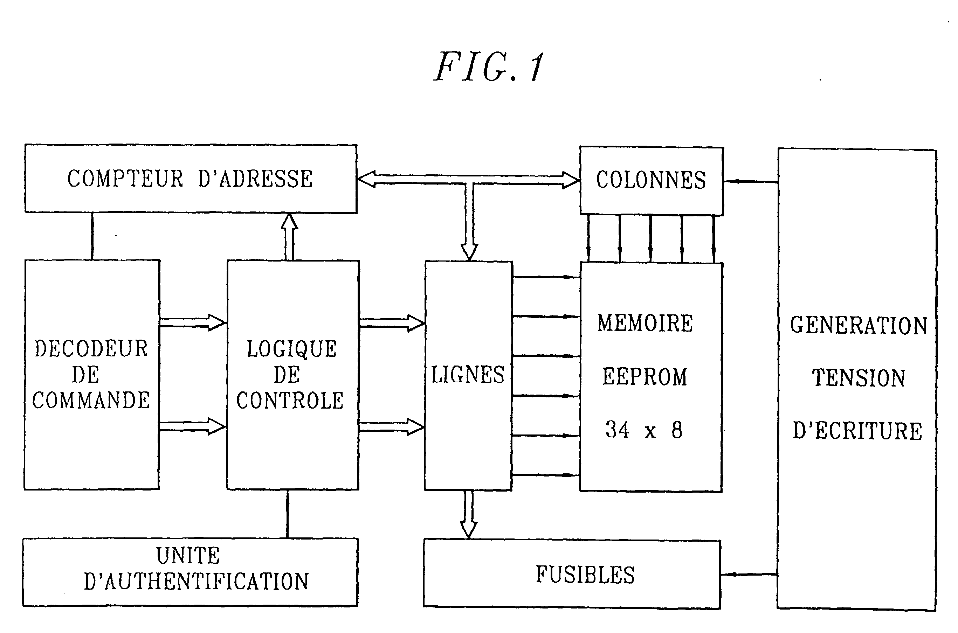

Pour cette carte de seconde génération un composant (ST 1333) a été développé par la société SGS Thomson comme représenté sur la figure 1 ce composant contient une mémoire EEPROM ("Electronically Erasable Programmable Read Only Memory") de 272 bits et n'a pas une architecture de type microprocesseur, mais une architecture spécifique, afin d'optimiser son coût.

L'un des avantages de l'utilisation d'une carte à mémoire de type EEPROM est qu'on peut organiser cette mémoire en boulier. Or les plots de programmation de la puce de cette carte sont seulement prévus pour recevoir l'une ou l'autre des trois commandes élémentaires suivantes : remise à zéro, incrémentation et lecture, écriture ou effacement. Plusieurs de ces commandes élémentaires doivent donc se succéder pour réaliser la mise à jour du boulier lorsque deux étages successifs du boulier sont concernés.

Le composant ST 1333 est en fait une mémoire série de 272 bits (lue et écrite en série) gérée par un compteur d'adresse, qui est incrémenté de un à chaque coup d'horloge, et remis à zéro par le signal de "reset".

La logique de contrôle de ce composant a plusieurs rôles :
- elle pilote les accès à la mémoire (lecture, écriture, effacement) en fonction des zones adressées et en fonction de la phase dans laquelle se trouve le circuit : test, initialisation, utilisation ;
- elle permet, grâce à une unité de calcul d'authentification, de calculer une signature sur quatre bits, à partir des données internes de la mémoire, dont une clé secrète, et un aléa à trente deux bits fourni par l'extérieur. Ce processus peut être répété plusieurs fois pour ajuster le niveau de sécurité au niveau requis. Ainsi la carte ne peut être "clonée", car ceci nécessiterait la connaissance de la clé secrète et de l'algorithme de calcul d'authentification ;
- elle permet la gestion d'un compteur irréversible de grande capacité. Ce compteur est constitué de six étages de huit bits et fonctionne en boulier : quand l'étage i est plein, un bit doit être rajouté à l'étage i+1, et l'étage i peut alors être effacé. Il s'agit donc d'un comptage en base huit sur six chiffres donnant une capacité de 8⁶ ≅ 256 000.

Cette organisation conduit à une logique très simple au niveau du circuit. Pour éviter, en cas de retrait intempestif de la carte, que le compteur soit dans un état non significatif, un mécanisme de registres témoins a été prévu : par exemple le registre indique que l'étage i+1 a été inscrit, mais que l'étage i n'a pas été effacé. Ainsi le terminal peut, à l'utilisation suivante de la télécarte, remettre le compteur dans un état significatif.

La présente invention concerne un circuit intégré de ce type pour support portable de type passif, c'est-à-dire ne comprenant pas de microprocesseur interne mais seulement une mémoire et des moyens de décodage pour, en réponse à un nombre limité de signaux de commande, accéder séquentiellement à des cases successives de cette mémoire et y effectuer des opérations de lecture, d'écriture ou d'effacement.

Un problème se pose si, pour une raison quelconque, le traitement d'une carte est brutalement interrompu avant la fin de la mise à jour du boulier.

Le brevet français FR-2 678 094 de France Télécom et de la Poste définit un mécanisme à base de témoin qui, après un arrachement brutal d'une carte avant la fin de mise à jour du boulier, permet de terminer cette mise à jour lors d'une utilisation ultérieure de la carte.

Ce brevet décrit un circuit intégré destiné à un support portable passif de comptage d'unités comprenant p étages de mémoire de comptage de données contenant des nombres de cases respectifs n1 ... np, une écriture étant effectuée dans une case d'un étage supérieur chaque fois que toutes les cases de l'étage inférieur ont été validées, les cases des étages inférieurs étant ensuite invalidées. Ce circuit comprend en outre p-1 étages témoins identiques aux p-1 étages de rang supérieur des p étages de comptage, la logique d'adressage des étages témoins étant telle que les cases de ces étages témoins sont adressées en écriture simultanément avec les cases des étages de comptage correspondants et, après une écriture, sont adressées en effacement en même temps que les cases des étages inférieurs à celui qui vient d'être validé.

### Zones concernées de la mémoire de la carte

Dans un tel circuit deux zones de la mémoire de la carte sont concernées par le comptage :
- une zone des compteurs, constituée d'au moins deux niveaux de compteurs (C1 et Cy) à x bits chacun, par exemple huit. Cette partie compteur est utilisable selon le principe du boulier. Pour compter on écrit régulièrement des bits dans un compteur Cn (le premier compteur "libre"). Quand il n'y a plus de bit vierge dans le compteur Cn, on écrit un bit dans le compteur "supérieur" Cn+1, ce qui autorise l'effacement du compteur Cn, effacement qui est effectué par une deuxième commande d'écriture à la même adresse ;
- une zone des compteurs témoins, constituée de y-1 registres témoins (RTy-1 à RT1) de x bits chacun. Ils servent à visualiser le bon effacement des compteurs. Si l'un des compteurs Cn n'a pas été correctement effacé, la position du bit dans le registre RTn indique sur quel bit du compteur Cn+1 la séquence d'effacement a été rompue. Les registres témoins sont associés aux compteurs de telle sorte que:
   - lorsqu'un bit est écrit dans la zone Cn, le mécanisme interne du composant écrit en même temps un bit dans le registre témoin RTn-1 et ce à la même position que celle du bit écrit dans le compteur Cn,
   - le registre témoin RTn-1 est effacé en même temps que la zone associée Cn-1 lors de la deuxième commande d'écriture.

### Modalité d'incrémentation des compteurs

Si l'on se place dans le cas le plus simple d'un compteur à deux étages, le compteur ayant la valeur 15 :

| Etage | Contenu | | | | | | | | Modulo | Valeur de L'étage |
|---|---|---|---|---|---|---|---|---|---|---|
| bit | 8 | 7 | 6 | 5 | 4 | 3 | 2 | 1 | | |
| C2 | 0 | 0 | 0 | 0 | 0 | 0 | 1 | 1 | 8 | 1*8=8 |
| C1 | 1 | 1 | 1 | 1 | 1 | 1 | 1 | 1 | 1 | 7*1=7 |

Si l'on veut à présent incrémenter le compteur de la carte de une unité, la valeur finale est 16. Pour réaliser cette opération, lé publiphone devra rechercher le premier bit "0" qu'il trouvera dans le compteur le plus bas et y écrire un "1".

Compte tenu de l'état du compteur, le bit 3 de C2 doit être positionné. Pour réaliser cette opération, une double écriture doit être faite comme indiqué ci-dessous :

### Premier ordre d'écriture sur le bit 3 de C2

| Etage | Contenu | | | | | | | | Modulo | Valeur de L'étage |
|---|---|---|---|---|---|---|---|---|---|---|
| bit | 8 | 7 | 6 | 5 | 4 | 3 | 2 | 1 | | |
| C2 | 0 | 0 | 0 | 0 | 0 | 1 | 1 | 1 | 8 | 2*8=16 |
| C1 | 1 | 1 | 1 | 1 | 1 | 1 | 1 | 1 | 1 | 7*1= 7 |

Après le premier ordre d'écriture, l'étage C2 a été incrémenté mais l'étage C1 est encore à sa valeur initiale. La valeur du compteur est donc 15 + 8 = 23.

### Deuxième ordre d'écriture sur le bit 3 de C2

| Etage | Contenu | | | | | | | | Modulo | Valeur de L'étage |
|---|---|---|---|---|---|---|---|---|---|---|
| bit | 8 | 7 | 6 | 5 | 4 | 3 | 2 | 1 | | |
| C2 | 0 | 0 | 0 | 0 | 0 | 1 | 1 | 1 | 512 | 2 * 8 = 16 |
| C1 | 0 | 0 | 0 | 0 | 0 | 0 | 0 | 0 | 1 | 0*1= 0 |

Le deuxième ordre d'écriture efface le contenu de C1. L'étage C1 se retrouve dans une configuration "illégale". Il est alors nécessaire d'écrire le bit 1 de C1 pour rétablir le compteur 1 dans une configuration "légale".

### Ordre d'écriture sur le bit 1 de C1

| Etage | Contenu | | | | | | | | Modulo | Valeur de L'étage |
|---|---|---|---|---|---|---|---|---|---|---|
| bit | 8 | 7 | 6 | 5 | 4 | 3 | 2 | 1 | | |
| C2 | 0 | 0 | 0 | 0 | 0 | 1 | 1 | 1 | 512 | 2 * 8 = 16 |
| C1 | 0 | 0 | 0 | 0 | 0 | 0 | 0 | 1 | 1 | 0 * 1 = 0 |

La valeur finale du compteur est 23 - 7 = 16, ce qui correspond au montant que l'on souhaitait inscrire.

### Témoins anti-arrachement

La mise en oeuvre du mécanisme anti-arrachement est illustrée par les tableaux ci-dessous (avec visualisation de la zone témoin), sur la base du même exemple (incrémentation d'une unité à partir d'un compteur dont la valeur est 15) :

### Premier ordre d'écriture du bit 3 de C2

| Etage | Contenu | | | | | | | | Modulo | Valeur de L'étage |
|---|---|---|---|---|---|---|---|---|---|---|
| bit | 8 | 7 | 6 | 5 | 4 | 3 | 2 | 1 | | |
| C2 | 0 | 0 | 0 | 0 | 0 | 1 | 1 | 1 | 512 | 2 * 8 = 16 |
| RT1 | 0 | 0 | 0 | 0 | 0 | 1 | 0 | 0 | | |
| C1 | 1 | 1 | 1 | 1 | 1 | 1 | 1 | 1 | 1 | 7 * 1 = 7 |

### Deuxième ordre d'écriture du bit 3 de C2

| Etage | Contenu | | | | | | | | Modulo | Valeur de L'étage |
|---|---|---|---|---|---|---|---|---|---|---|
| bit | 8 | 7 | 6 | 5 | 4 | 3 | 2 | 1 | | |
| C2 | 0 | 0 | 0 | 0 | 0 | 1 | 1 | 1 | 512 | 2 * 8 = 16 |
| RT1 | 0 | 0 | 0 | 0 | 0 | 0 | 0 | 0 | | |
| C1 | 0 | 0 | 0 | 0 | 0 | 0 | 0 | 0 | 1 | 0 * 1 = 0 |

### Procédure de reprise

Lorsque la carte est retirée du lecteur entre deux écritures, au moment de l'utilisation suivante de la carte sur un autre publiphone, une procédure spéciale est mise en oeuvre. En effet, le bit 3 de RT1 positionné indique une interruption du mécanisme de mise à jour du compteur au cours de la double écriture du bit 3 de C2. Il suffit donc de réaliser une séquence d'écriture sur le bit 3 de C2. Cela nécessite une double écriture dont le détail est identique à celui de la procédure normale (voir ci-dessus). Cette procédure établit le compteur dans la configuration finale attendue. Il ne reste plus alors qu'à écrire le bit 1 de C1 pour rétablir le compteur 1 dans une configuration légale.

D'autre part les cartes à mémoire peuvent contenir un circuit d'authentification câblé et une logique de conditions d'accès par zones. Une demande de brevet français FR-2- 704 081 de France Télécom et de la Poste décrit une mise en oeuvre particulière de ces quelques fonctions pour réaliser une "carte porte-monnaie" à bas coût.

Pour réaliser la fonction porte-monnaie à bas coût, la carte doit contenir trois zones : une zone solde, une zone compteur et une zone certificat. La zone certificat inclut l'identité du module de sécurité qui a généré le certificat et donc qui a encaissé le montant débit du porte-monnaie. La carte doit contenir des moyens pour que le compteur (accessible en lecture et en écriture mais non effaçable) soit incrémenté avant la mise à jour des zones solde et certificat. Les zones solde et certificat sont accessibles en lecture et écriture mais ne sont effaçable que si le contenu du compteur a été incrémenté.

La fonction porte-monnaie électronique s'appuie sur la réalisation d'une double procédure d'authentification, l'une dès le début de la transaction, pour établir l'authenticité de la carte et de son contenu initial, et l'autre à la fin de la transaction, après que le débit a été calculé et que le contenu de la mémoire a été mis à jour. La mise à jour du porte-monnaie consiste à incrémenter le compteur de une unité, à effacer l'ancien solde et l'ancien certificat, à écrire à la place le nouveau solde et le nouveau certificat.

L'inconvénient de la technique actuelle est qu'elle ne permet pas de gérer un mécanisme de reprise sur la zone solde + certificat en cas d'arrachement de la carte du terminal au cours de la séquence de mise à jour du solde et du certificat. Le mécanisme anti-arrachement ne porte que sur la zone des compteurs, mais il ne porte pas sur la zone solde + certificat. En effet, le solde et le certificat se retrouvent à zéro si la carte est arrachée entre le moment où le solde et le certificat sont effacés et le montant où les nouvelles valeurs du solde et du certificat sont écrites. De même, le solde et le certificat se retrouvent à une valeur indéterminée si la carte est arrachée durant la phase d'écriture du nouveau solde et du nouveau certificat.

L'objet de l'invention est d'enrichir les mécanismes anti-arrachement d'une carte à mémoire afin de pouvoir gérer un mécanisme de reprise sur la zone solde + certificat avec la même efficacité que sur la zone des compteurs.

### Exposé de l'invention

La présente invention propose une carte à mémoire comprenant :
- une zone compteur constituée d'au moins deux niveaux de compteurs d'au moins deux bits chacun, utilisable selon le principe du boulier ;
- une première zone témoin constituée d'au moins un registre témoin d'au moins deux bits servant à visualiser le bon effacement des compteurs;
caractérisée en ce que la carte comprend une zone solde accessible en écriture et en lecture, et effaçable uniquement si le contenu de la zone compteur a été incrémenté, en ce que la carte comprend une seconde zone témoin structurée en deux champs, en ce que l'un des champs de la seconde zone témoin est associé à la zone solde, et en ce que l'autre champ de la seconde zone témoin est libre, l'écriture des bits du solde ayant lieu simultanément dans la zone solde ainsi que dans le champ libre de la seconde zone témoin, et en ce que la zone solde et chacun des deux champs de la seconde zone témoin comprennent un bit de validation permettant de savoir si le solde présent est complètement écrit.

Elle peut comprendre de plus une zone certificat accessible en écriture et en lecture, et effaçable uniquement si le contenu de la zone compteur a été incrémenté, une troisième zone témoin structurée en deux champs en ce que l'un des champs de la troisième zone témoin est associé à la zone certificat, et en ce que l'autre champ de la troisième zone témoin est libre, l'écriture des bits du certificat ayant lieu simultanément dans la zone certificat ainsi que dans le champ libre de la troisième zone témoin, et en ce que la zone certificat et chacun des deux champs de la troisième zone témoin comprennent un bit de validation permettant de savoir si le certificat présent est complètement écrit.

La présente invention vise plus particulièrement des cartes dans lesquelles la mémoire est effaçable électriquement, par exemple une mémoire de type EEPROM, c'est-à-dire une mémoire morte électriquement programmable et électriquement effaçable.

Une application courante des cartes à mémoire est celle des cartes prépayées. Dans de telles cartes, les cases de la mémoire sont initialement dans un certain état, et cet état est modifié en réponse à des impulsions externes correspondant à des unités de coût d'un service quelconque fourni par un lecteur dans lequel est insérée la carte.

L'invention s'applique également dans d'autres utilisations où des unités de compte sont enregistrées dans la carte et sont décrémentées ou incrémentées au fur et à mesure de l'utilisation ; ces unités peuvent avoir une valeur monétaire ou non.

Cette carte à mémoire peut également être une carte du type télécarte.

La présente invention concerne également un procédé qui comprend les étapes suivantes :
- on écrit simultanément des bits du solde dans la zone solde et dans le champ libre de la seconde zone témoin, en suite
- on positionne un bit de validation à un dans la zone solde, et on utilise un mécanisme de double écriture pour l'écriture de ce bit de validation, dans ce mécanisme une première écriture du bit de validation dans la zone solde provoque l'écriture simultanée du bit de validation dans ledit champ libre de la seconde zone témoin et autorise l'effacement de l'autre champ de cette seconde zone témoin et une seconde écriture du bit de validation dans le zone solde provoque l'effacement de la totalité des bits dudit autre champ de la seconde zone témoin.

De même ledit procédé peut comprendre les étapes suivantes :
- on écrit simultanément des bits du certificat dans la zone certificat et dans le champ libre de la troisième zone témoin, ensuite
- on positionne un bit de validation à un dans la zone certiticat, et on utilise un mécanisme de double écriture pour l'écriture de ce bit de validation, dans ce mécanisme une première écriture du bit de validation dans la zone certificat provoque l'écriture simultanée du bit de validation dans ledit champ libre de la troisième zone témoin et autorise l'effacement de l'autre champ de cette troisième zone témoin, et une seconde écriture du bit de validation dans la zone certiticat provoque l'effacement de la totalité des bits dudit autre champ de cette troisième zone témoin.

Avantageusement chaque zone témoin est gérée par le circuit de la carte. Le basculement entre les champs de la zone témoin est géré grâce à la valeur d'un bit de validation de chaque champ de la zone témoin ou par la valeur respective du solde et du solde témoin si ces bits de validation sont égaux. Chaque zone témoin est effacée en cas de remise à zéro si le bit de validation correspondant n'est pas positionné. La double écriture du bit de validation provoque l'effacement du champ de la zone témoin correspondant au solde précédent.

La présente invention permet la mise en place de systèmes à prépaiement dits ouverts. On désigne par là des systèmes impliquant un organisme émetteur de monnaie électronique, des utilisateurs possédant des cartes préchargées par l'émetteur, et des terminaux aptes à fournir certaines prestations, à débiter les cartes en conséquence et à collecter les montants provenant de plusieurs cartes. L'organisme propriétaire de ces terminaux est rétribué par l'émetteur selon la quantité d'unités qu'il a collectées. Le caractère ouvert de ce système vient de ce que l'organisme émetteur n'est pas nécessairement confondu avec les prestataires possédant les terminaux.

Si l'invention s'applique de manière privilégiée à de tels systèmes, parce qu'elle permet de résoudre certains problèmes liés au caractères "ouvert", elle n'est pas limitée pour autant à ces seuls systèmes et pourrait aussi bien s'appliquer à des systèmes fermés, ou l'organisme émetteur serait le propriétaire des terminaux.

### Brève description des figures

- La figure 1 illustre le schéma bloc du composant d'une carte de type T2G ;
- la figure 2 illustre une image mémoire, dans laquelle sont mis en évidence les mécanismes internes mis en oeuvre par une carte T2G simple, par une carte T2G "porte-monnaie" et les mécanismes supplémentaires mis en oeuvre dans le cadre de l'invention.

### Exposé détaillé de modes de réalisation

On ne mentionnera ci-après, par souci de simplicité, que des cartes à mémoire car il s'agit d'un support plus couramment utilisé, mais il est clair que tout autre support portable peut être utilisé.

La suite de la description porte sur le mécanisme anti-arrachement concernant le solde du porte-monnaie. Il est bien évident que le même mécanisme peut être appliqué au certificat (preuve d'authenticité).

Deux mécanismes complémentaires permettent d'atteindre l'objectif précédent :

Dans un premier mécanisme, un bit de validation permet de savoir sans ambiguïté si le solde présent est complètement écrit. Ce bit de validation est positionné en mettant en oeuvre un mécanisme de double écriture. Ce bit de validation garantit que le solde correspondant est complètement écrit, qu'il s'agisse du solde proprement dit ou du témoin de solde. Il est écrit (par l'application) lorsque le solde correspondant a été lui-même écrit. Si ce bit n'est pas positionné, le solde est réputé non écrit ;

Un second mécanisme de reprise de la transaction à partir du solde antérieur s'appuie sur une zone registre témoin d'un champ de données (le solde par exemple) elle-même structurée en deux champs.

Le fonctionnement de l'invention est le suivant :

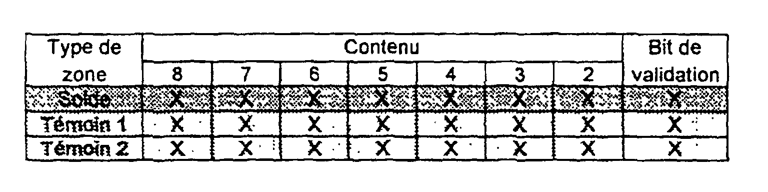

Le bit de validation (bit de rang 1) garantit que le solde correspondant est complètement écrit, qu'il s'agisse du solde proprement dit ou du témoin de solde. Il est écrit (par l'application) lorsque le solde correspondant a été lui-même écrit. Si ce bit n'est pas positionné, le solde est réputé non écrit. Ce bit de validation est positionné en mettant en oeuvre un mécanisme de double écriture.

Les bits du solde son écrits par simple écriture, simultanément, dans la zone solde et dans une zone témoin (par exemple la zone témoin 1) tout comme les bits témoins de la zone compteur. Une fois le solde complètement écrit, le bit de validation dans la zone solde et dans la zone témoin associée autorise l'effacement de l'autre zone témoin (zone 2, dans l'exemple précédent) par double écriture.

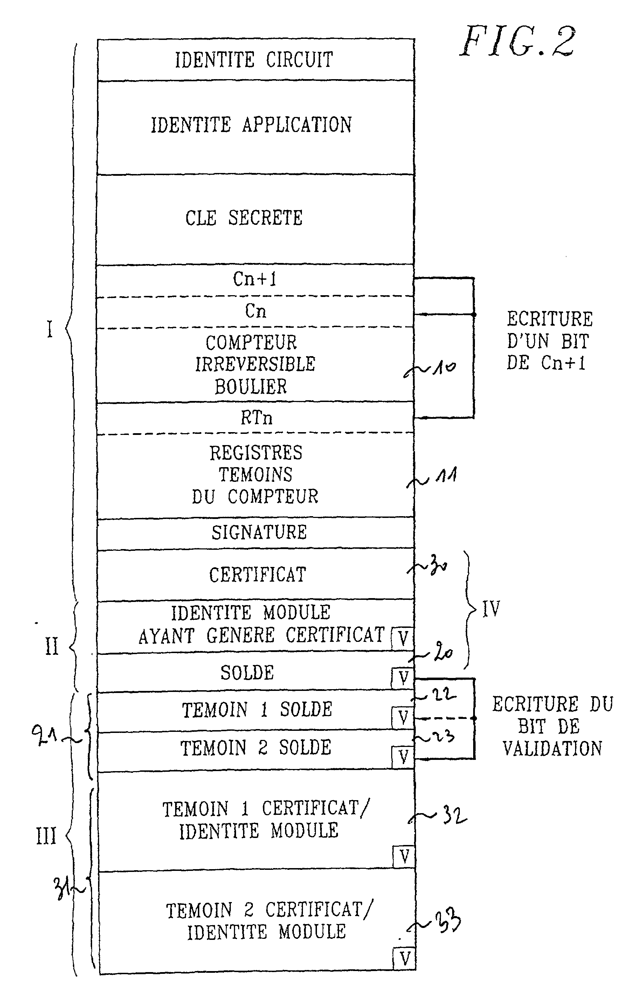

Les mécanismes internes mis alors en oeuvre par une carte T2G sont illustrés sur la figure 2.

La carte ne connaît que trois commandes élémentaires :
- remise à zéro ;
- incrémentation et lecture ;
- écriture.

L'image mémoire de la carte comprend trois zones :
- la zone I correspond à la carte T2G actuelle (légèrement réaménagée) ;
- la zone II correspond à la carte T2G "porte-monnaie" ;
- la zone III correspond à l'invention.

"v" représente un bit de validation

Ces mécanismes peuvent être subdivisés en :

### Mécanismes internes mis en oeuvre par la T2G "simple"

L'écriture d'un bit de Cn+1 comprend :
- une première écriture qui :
   - autorise l'effacement de l'ensemble des bits du compteur Cn,
   - provoque l'écriture simultanée d'un bit dans RTn à la même position que le bit de Cn+1 ;
- une seconde écriture qui :
   - efface l'ensemble des bits du compteur Cn,
   - efface simultanément le bit témoin.

### Mécanismes supplémentaires mis en oeuvre par la T2G "porte-monnaie"

Les montants sont comptés dans la zone "solde" 20 et pas dans la zone "compteur" 10.

La zone IV est effaçable seulement après incrémentation du compteur et elle entre dans le calcul de la signature.

### Mécanismes supplémentaires mis en oeuvre dans le cadre de l'invention

L'écriture du bit de validation v peut se subdiviser :
- une première écriture du bit de validation qui provoque l'écriture simultanée du bit de validation du témoin 1 de solde 22 "libre", et qui autorise l'effacement du témoin 2 de solde 23. Les bits de solde sont écrits simultanément dans la zone solde 20 et dans la zone témoin libre ;
- une deuxième écriture du bit de validation v qui provoque l'effacement de la totalité des bits de la zone 2 solde.

Il en est de même pour la zone certificat 30 (module identité)

L'incrémentation du compteur provoque l'effacement des zones "solde" 20 et "certificat" 30 ainsi que celui des zones témoins "solde" 22, 23 et "certificat" 32, 33 dont le bit de validation v est à 0.

Le bit témoin ne doit être écrit par l'application que lorsque le solde lui-même est écrit.

On va à présent considérer des modes particuliers de réalisation. Supposons que la situation de départ soit la suivante : un solde d'un montant quelconque est inscrit et validé (bit de validation à 1) dans la zone solde. Le solde témoin est inscrit et validé dans la zone témoin 2. Dans cet exemple, le solde et ses témoins sont supposés tenir chacun sur 8 bits (7 bits pour le solde proprement dit et un bit de validation).

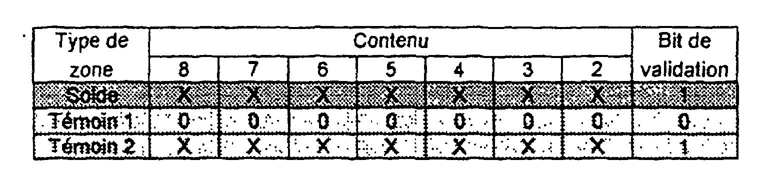

A partir du moment où un nouveau solde doit être inscrit dans la carte, le compteur de transaction est incrémenté, ce qui provoque l'effacement du solde courant et du bit de validation associé (de même que l'effacement le cas échéant du témoin dont le bit système est à "0").

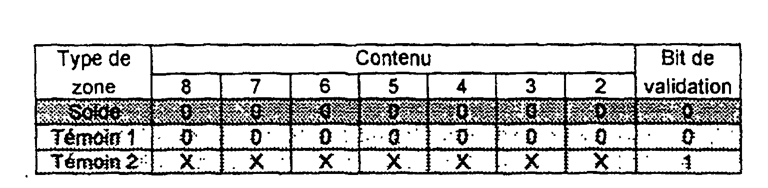

Dans cette situation, le solde courant est effacé mais sa trace existe dans la zone témoin validée. Un mécanisme de reprise peut donc démarrer à partir de la lecture du montant inscrit dans le témoin valide (le témoin 2 dans ce cas).

Supposons que le nouveau solde à inscrire soit 32+16+2 = 50 unités. L'écriture du nouveau solde se fait à la fois dans la zone solde et dans la zone témoin "libre" (celle dont le bit témoin est "0").

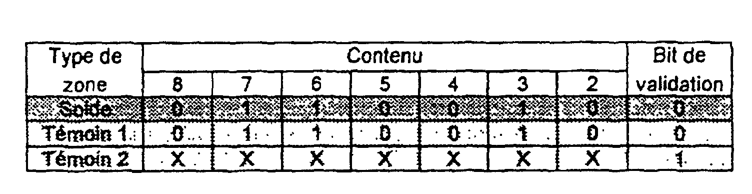

Tant que le bit de validation n'est pas positionné, le solde n'est pas réputé écrit, en particulier, on ne sait pas si le bit de poids faible devait être écrit ou non. Le seul solde sur est le solde précédent qui se trouve dans la zone témoin validée (c'est-à-dire dans la zone témoin 2, celle qui a le bit de validation à "1"). Ici aussi un mécanisme de reprise peut démarrer à partir de la lecture du montant inscrit dans le témoin valide (le témoin 2 dans ce cas). Préalablement une double écriture sur le premier bit disponible du compteur de transaction aura remis à zéro le solde et le témoin dont le bit de validation est à "0".

Si l'application estime que le solde inscrit est correct, le bit de validation est positionné. L'écriture du bit de validation dans la zone solde s'accompagne de l'écriture simultanée du bit de validation dans la zone témoin associée et autorise l'effacement de l'autre zone témoin (zone 2, dans l'exemple précédent) par double écriture.

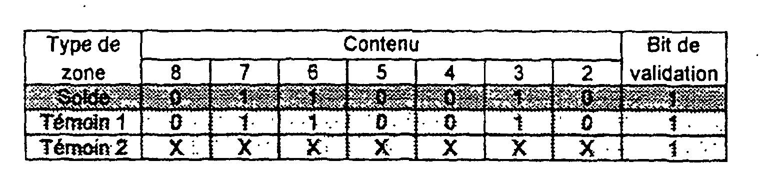

Si la carte est retirée du publiphone à ce moment là, un mécanisme de reprise est possible. il suffit de constater la coïncidence entre le solde (y compris son bit de validation) et l'une des zones témoin de poursuivre les opérations à partir de ce point.

La double écriture du bit témoin provoque l'effacement de la zone témoin obsolète (celle qui ne coïncide pas avec le solde).

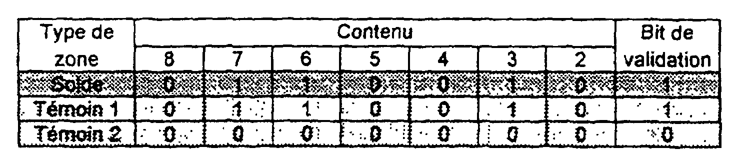

Avec cette opération s'achève la mise à jour du solde.

Une variante de l'invention consiste à traiter le bit témoin de la façon suivante: l'écriture du bit de validation dans la zone solde s'accompagne de l'écriture simultanée du bit de validation dans la zone témoin associée et de l'effacement du bit témoin de l'autre témoin (zone 2, dans l'exemple précédent), la double écriture du bit système provoquant l'effacement du témoin lui même par double écriture.

## Revendications

1. Carte à mémoire comprenant :
- une zone compteur (10) constituée d'au moins deux niveaux de compteurs d'au moins deux bits chacun, utilisable selon le principe du boulier ;
- une première zone témoin (11) constituée d'au moins un registre témoin d'au moins deux bits servant à visualiser le bon effacement des compteurs ;
**caractérisé en ce que** la carte comprend une zone solde (20) accessible en écriture et en lecture, et effaçable uniquement si le contenu de la zone compteur (10) a été incrémenté, **en ce que** la carte comprend une seconde zone témoin (21) structurée en deux champs (22, 23), **en ce que** l'un des champs de la seconde zone témoin (21) est associé à la zone solde, et **en ce que** l'autre champ de la seconde zone témoin est libre, l'écriture des bits du solde ayant lieu simultanément dans la zone solde (20) ainsi que dans le champ libre de la seconde zone témoin (21), et **en ce que** la zone solde et chacun des deux champs de la seconde zone témoin comprennent un bit de validation permettant de savoir si le solde présent est complètement écrit.

2. Carte à mémoire selon la revendication 1 comprenant une zone certificat (30) accessible en écriture et en lecture, et effaçable uniquement si le contenu de la zone compteur (10) a été incrémenté, **caractérisé en ce que** la carte comprend une troisième zone témoin (31) structurée en deux champs (32, 33) **en ce que** l'un des champs de la troisième zone témoin est associé à la zone certificat, et **en ce que** l'autre champ de la troisième zone témoin est libre, l'écriture des bits du certificat ayant lieu simultanément dans la zone certificat ainsi que dans le champ libre de la troisième zone témoin, et **en ce que** la zone certificat et chacun des deux champs de la troisième zone témoin comprennent un bit de validation permettant de savoir si le certificat présent est complètement écrit.

3. Carte à mémoire selon la revendication 1 comprenant une mémoire effaçable électriquement.

4. Carte à mémoire selon la revendication 3, dans laquelle la mémoire est de type EEPROM.

5. Carte à mémoire selon l'une quelconque des revendications précédentes, qui est du type carte prépayée.

6. Carte à mémoire selon l'une quelconque des revendications 1 à 4, qui est apte à enregistrer des unités de compte, celles-ci étant décrémentées ou incrémentées au fur et à mesure de l'utilisation, ces unités ayant ou non une valeur monétaire.

7. Carte à mémoire selon l'une quelconque des revendications 1 à 4, qui est une carte du type télécarte.

8. Procédé pour éviter toute perte d'information lorsqu'une carte à mémoire utilisée en mode porte-monnaie est arrachée d'un terminal à carte, cette carte comprenant une zone compteur (10), une première zone témoin (11) servant à visualiser le bon effacement des compteurs de la zone compteur, une zone solde (20) accessible en écriture et en lecture, et effaçable uniquement si le contenu de la zone compteur a été incrémenté, et une seconde zone témoin (21) structurée en deux champs l'un des champs étant associé à la zone solde, l'autre champ étant libre, ledit procédé comprenant les étapes suivantes :
- on écrit simultanément des bits du solde dans la zone solde (20) et dans le champ libre de la seconde zone témoin (21), ensuite
- on positionne un bit de validation à un dans la zone solde (20), et on utilise un mécanisme de double écriture pour l'écriture de ce bit de validation, dans ce mécanisme une première écriture du bit de validation dans la zone solde provoque l'écriture simultanée du bit de validation dans ledit champ libre de la seconde zone témoin et autorise l'effacement de l'autre champ de cette seconde zone témoin, et une seconde écriture du bit de validation dans la zone solde provoque l'effacement de la totalité des bits dudit autre champ de la seconde zone témoin.

9. Procédé selon la revendication 8, la carte comprenant également une zone certificat (30) accessible en écriture et en lecture, et effaçable uniquement si le contenu de la zone compteur (10) a été incrémenté et une troisième zone témoin (31) structurée en deux champs (32, 33) l'un des champs étant associé à la zone certificat, l'autre champ étant libre **caractérisé en ce que** ledit procédé comprend les étapes suivantes :
- on écrit simultanément des bits du certificat dans la zone certificat et dans le champ libre de la troisième zone témoin, ensuite
- on positionne un bit de validation à un dans la zone certificat (30), et **en ce que** l'on utilise un mécanisme de double écriture pour l'écriture de ce bit de validation, dans ce mécanisme une première écriture du bit de validation dans la zone certificat provoque l'écriture simultanée du bit de validation dans ledit champ libre de la troisième zone témoin, et autorise l'effacement de l'autre champ de cette troisième zone témoin, et une seconde écriture du bit de validation dans la zone certificat provoque l'effacement de la totalité des bits dudit autre champ de cette troisième zone témoin.

10. Procédé selon la revendication 8 ou la revendication 9, dans lequel chaque zone témoin est gérée par le circuit de la carte.

11. Procédé selon la revendication 10, dans lequel le basculement entre les champs de la zone témoin est géré grâce à la valeur d'un bit de validation de chaque champ de la zone témoin ou par la valeur respective du solde et du solde témoin, si les bits de validation sont égaux.

12. Procédé selon la revendication 11, dans lequel une zone témoin est effacée en cas de remise à zéro si le bit de validation correspondant n'est pas positionné.

13. Procédé selon la revendication 12, dans lequel la double écriture du bit de validation provoque effacement du champ de la zone témoin correspondant au solde précédent.

## Claims

1. Smart card comprising:
- a counter zone (10) constituted by at least two levels of counters having at least two bits each and usable according to the abacus principle,
- a first control zone (11) constituted by at least one control register having at least two bits for displaying the correct erasing of the counters, **characterized in that** the card comprises a balance zone (20) accessible in writing and reading and solely erasable if the content of the counter zone (10) has been incremented, **in that** the card comprises a second control zone (21) structured into two fields (22, 23), **in that** one of the fields of the second control zone (21) is associated with the balance zone and **in that** the other field of the second control zone is free, the writing of the bits of the balance taking place simultaneously in the balance zone (20) and in the free field of the second control zone (21) and **in that** the balance zone and each of the two fields of the second control zone comprise a validation bit making it possible to know whether the balance present is completely written.

2. Smart card according to claim 1 comprising a certificate zone (30) accessible in writing and reading and only erasable if the content of the counter zone (10) has been incremented, **characterized in that** the card comprises a third control zone (31) structured into two fields (32, 33), **in that** one of the fields of the third control zone is associated with the certificate zone and **in that** the other field of the third control zone is free, the writing of the bits of the certificate taking place simultaneously in the certificate zone and in the free field of the third control zone and **in that** the certificate zone and each of the two fields of the third control zone comprise a validation bit making it possible to know if the certificate present is completely written.

3. Smart card according to claim 1 comprising an electrically erasable memory.

4. Smart card according to claim 3, wherein the memory is of the EEPROM type.

5. Smart card according to any one of the preceding claims, which is of the prepaid card type.

6. Smart card according to any one of the claims 1 to 4 able to register account units, the latter being decremented or incremented as the card is used, said units may or may not have a monetary value.

7. Smart card according to any one of the claims 1 to 4 in the form of a phone card.

8. Method for avoiding any information loss when a smart card used in the purse mode is torn from a card terminal, said card having a counter zone (10), a first control zone (11) for displaying the correct erasing of the counters of the counter zone, a balance zone (20) accessible in reading and writing and only erasable if the content of the counter zone has been incremented and a second control zone (21) structured into two fields, one of the fields being associated with the balance zone and the other field being free, said method comprising the following stages:
- simultaneous writing takes place of the bits of the balance in the balance zone (20) and in the free field of the second control zone (21), then
- a validation bit is positioned in the balance zone (20),
- and use is made of a double writing mechanism for writing said validation bit in said mechanism, a first writing of the validation bit in the balance zone bringing about the simultaneous writing of the validation bit in said free field of the second control zone and authorizes the erasing of the other field of said second control zone and a second writing of the validation bit in the balance zone brings about the erasing of all the bits of said other field of the second control zone.

9. Method according to claim 8, the card also comprising a certificate zone (30) accessible in writing and reading and only erasable if the content of the counter zone (10) has been incremented and a third control zone (31) structured into two fields (32, 33), one of the fields being associated with the certificate zone and the other field is free, **characterized in that** said method comprises the following stages:
- simultaneous writing takes place of the bits of the certificate in the certificate zone and in the free field of the third control zone, then
- a validation bit is positioned in the certificate zone (30),
- and **in that** use is made of a double writing mechanism for writing said validation bit in said mechanism, a first writing of the validation bit in the certificate zone bringing about the simultaneous writing of the validation bit in said free field of the third control zone and authorizes the erasing of the other field of said third control zone and a second writing of the validation bit in the certificate zone brings about the erasing of all the bits of said other field of said third control zone.

10. Method according to claim 8 or 9, wherein each control zone is managed by the card circuit.

11. Method according to claim 10, wherein the switching between the fields of the control zone is managed by means of the value of a validation bit of each field of the control zone or by the respective value of the balance and the control balance, if the validation bits are equal.

12. Method according to claim 11, wherein a control zone is erased in the case of zeroing if the corresponding validation bit is not positioned.

13. Method according to claim 12, wherein the double writing of the validation bit brings about the erasing of the field of the control zone corresponding to the preceding balance.

## Patentansprüche

1. Speicherkarte mit:
einer Zählerzone (10), die aus mindestens zwei Zählerstufen mit jeweils mindestens zwei Bits besteht, verwendbar nach dem Abakus-Prinzip,
einer ersten Prüfzone (11) die aus mindestens einem Prüfregister von mindestens zwei Bits, das dazu dient, das ordnungsgemäße Löschen bzw. Rücksetzen der Zähler anzuzeigen, besteht
**dadurch gekennzeichnet, daß**
die Karte eine sowohl beim Schreiben als auch beim Lesen zugängliche Saldozone (20) umfaßt, die nur dann löschbar ist, wenn der Inhalt der Zählerzone (10) inkrementiert wurde,
die Karte eine zweite, in zwei Felder (22,23) strukturierte Prüfzone (21) umfaßt,
eines der Felder der zweiten Prüfzone (21) der Saldozone zugeordnet und das andere Feld der zweiten Prüfzone frei ist, wobei das Einschreiben der Saldobits gleichzeitig in die Saldozone (20) und in das freie Feld der zweiten Prüfzone (21) stattfindet, und
die Saldozone sowie jedes der beiden Felder der zweiten Prüfzone ein Validierungsbit aufweisen, das zu erkennen gibt, ob der vorhandene Saldo vollständig eingeschrieben ist.

2. Speicherkarte gemäß Anspruch 1 mit einer beim Schreiben und Lesen zugänglichen Zertifikatszone (30), die nur dann löschbar ist, wenn der Inhalt der Zählerzone (10) inkrementiert wurde,
**dadurch gekennzeichnet, daß**
die Karte eine in zwei Felder (32,33) strukturierte dritte Prüfzone (31) aufweist,
eines der Felder der dritten Prüfzone der Zertifikatszone zugeordnet und das andere Feld der dritten Prüfzone frei ist,
das Einschreiben der Zertifikatsbits gleichzeitig in die Zertifikatszone und in das freie Feld der dritten Prüfzone stattfindet, und
die Zertifikatszone sowie jedes der beiden Felder der dritten Prüfzone ein Validierungsbit aufweisen, das zu erkennen gibt, ob das vorhandene Zertifikat vollständig eingeschrieben ist.

3. Speicherkarte gemäß Anspruch 1, mit einem elektrisch löschbaren Speicher.

4. Speicherkarte gemäß Anspruch 3, bei der der Speicher vom EEPROM-Typ ist.

5. Speicherkarte gemäß einem der vorangehenden Ansprüche, die vom Typ der vorbezahlten Karte ist.

6. Speicherkarte gemäß einem der Ansprüche 1 bis 4, die dazu geeignet ist, Zähleinheiten aufzuzeichnen, wobei diese je nach Verwendung dekrementiert oder inkrementiert werden und die Einheiten einen Geldwert besitzen oder nicht.

7. Speicherkarte gemäß einem der Ansprüche 1 bis 4, die eine Karte vom Telekartentyp ist.

8. Verfahren zur Vermeidung jeglichen Informationsverlusts, wenn eine im Portemonnaie-Modus verwendete Speicherkarte aus einem Kartenterminal entnommen wird, wobei die Karte eine Zählzone (10) umfaßt: eine erste Prüfzone (11), die dazu dient, das ordnungsgemäße Löschen bzw. Rückstellen der Zähler der Zählzone sichtbar zu machen, eine beim Schreiben und Lesen zugängliche Saldozone (20), die nur dann löschbar ist, wenn der Inhalt der Zählerzone (10) inkrementiert wurde, sowie eine in zwei Felder strukturierte zweite Prüfzone (21), wobei eines der Felder der Saldozone zugeordnet und das andere Feld frei ist, **dadurch gekennzeichnet, daß** das Verfahren folgende Schritte umfaßt:
gleichzeitiges Einschreiben von Saldobits in die Saldozone (20) und in das freie Feld der zweiten Prüfzone (21), dann
Setzen eines Validierungsbits in der Saldozone (20) auf eins,
Anwenden eines Doppel-Schreibmechanismus für das Schreiben dieses Validierungsbits, wobei in diesem Mechanismus ein erstes Einschreiben des Validierungsbits in die Saldozone das gleichzeitige Einschreiben des Validierungsbits in das freie Feld der zweiten Prüfzone veranlaßt und die Löschung des anderen Feldes dieser zweiten Prüfzone gestattet, und ein zweites Einschreiben des Validierungsbits in die Saldozone die Löschung aller Bits des anderen Feldes der zweiten Prüfzone veranlaßt.

9. Verfahren gemäß Anspruch 8, wobei die Karte auch eine beim Schreiben und Lesen zugängliche Zertifikatszone (30), die nur dann löschbär ist, wenn der Inhalt der Zählerzone (10) inkrementiert wurde, und eine in zwei Felder (32,33) strukturierte Prüfzone (31) umfaßt,
wobei eines der Felder der Zertifikatszone zugeordnet und das andere Feld frei ist, **dadurch gekennzeichnet, daß** das Verfahren folgende Schritte umfaßt:
gleichzeitiges Einschreiben der Zertifikatsbits in die Zertifikatszone (20) und in das freie Feld der dritten Prüfzone (21),
anschließendes Setzen eines Validierungsbits in der Zertifikatszone (30) auf eins,
Anwenden eines Doppel-Schreibmechanismus für das Schreiben dieses Validierungsbits, wobei in diesem Mechanismus ein erstes Einschreiben des Validierungsbits in die Zertifikatszone das gleichzeitige Einschreiben des Validierungsbits in das freie Feld der dritten Prüfzone veranlaßt und die Löschung des anderen Feldes dieser dritten Prüfzone gestattet, und ein zweites Einschreiben des Validierungsbits in die Zertifikatszone die Löschung aller Bits des anderen Feldes dieser dritten Prüfzone veranlaßt.

10. Verfahren gemäß Anspruch 8 oder Anspruch 9, bei dem jede Prüfzone über den Schaltkreis der Karte gesteuert wird.

11. Verfahren gemäß Anspruch 10, bei dem das Kippen bzw. Umschalten zwischen den Feldern der Prüfzone anhand des Werts eines Validierungsbits jedes Feldes der Prüfzone oder anhand des betreffenden Werts des Saldos und des Prüfsaldos, wenn die Validierungsbits gleich sind, gesteuert wird.

12. Verfahren gemäß Anspruch 11, bei dem eine Prüfzone im Falle des Nullstellens gelöscht wird, wenn das entsprechende Validierungsbit nicht gesetzt wurde.

13. Verfahren gemäß Anspruch 12, bei dem das doppelte Einschreiben des Validierungsbits die Löschung des Feldes der Prüfzone, die dem vorangehenden Saldo entspricht, veranlaßt.
